# EUROPEAN PATENT APPLICATION

(11) **EP 3 367 090 A1**
(43) Date of publication of application: **29.08.2018**
(21) Application number: 18154150.9
(22) Date of filing: 30.01.2018
(51) Int. Cl.: G01N 27/90

(54) **EDDY-CURRENT TESTING METHOD AND EDDY-CURRENT TESTING DEVICE**

(30) Priority: 27.02.2017 JP 2017034332
(71) Applicant: Mitsubishi Hitachi Power Systems, Ltd., Nishi-ku Yokohama 220-8401 (JP)
(72) Inventor: KAKUGAWA, Shigeru, Tokyo 100-8280 (JP); NISHIMIZU, Akira, Tokyo 100-8280 (JP); SUZUKI, Yutaka, Tokyo 100-8280 (JP)
(74) Representative: MERH-IP Matias Erny Reichl Hoffmann Patentanwälte PartG mbB

(57) **Abstract**

An eddy-current testing method comprises liftoff signal measuring step S1 of giving liftoff to an eddy-current testing probe 10 including one or more coils and measuring a liftoff signal of a reference specimen, phase recording step S2 of recording a phase of a Lissajous figure obtained from the liftoff signal of the reference specimen, eddy-current testing signal measuring step S3 of measuring an eddy-current testing signal of an object 8 using the eddy-current testing probe 10, and decision step S5, S7 of deciding that the eddy-current testing signal detected in the eddy-current testing signal measuring step S3 is a liftoff signal if the eddy-current testing probe 10 detects the eddy-current testing signal in all the coils in the eddy-current testing signal measuring step S3 and a phase of a Lissajous figure obtained from the eddy-current testing signal detected in the eddy-current testing signal measuring step S3 coincides with the phase recorded in the phase recording step S2 for all the coils.

## Description

### FIELD OF THE INVENTION

The present invention relates to an eddy-current testing method and an eddy-current testing device.

### BACKGROUND OF THE INVENTION

Eddy-current testing is a method in which an eddy-current testing probe (hereinafter simply called "probe") is brought into close contact with a conductive object to scan the object and induce it to generate an eddy current by an AC magnetic field generated by a coil of the probe, and it is decided whether the object has a flaw or not according to change in the impedance of the coil which is caused by an eddy current turbulence due to a flaw. When a small narrow portion of the object is inspected by eddy-current testing, it is difficult for the probe to scan it stably, and liftoff, a phenomenon that the probe leaves the surface of the object (inspection surface) and is not in contact with the inspection surface, occurs, resulting in generation of a liftoff signal depending on the distance between the probe and the object (amount of liftoff). Since a liftoff signal is a noise, in order to measure an eddy-current testing signal (flaw signal) due to a flaw accurately, it is necessary to suppress liftoff and distinguish a liftoff signal from a measured signal.

JP 2012-141238 discloses an eddy-current testing method which can evaluate the amount of liftoff accurately even if a curved surface is inspected using a flexible probe. In the eddy-current testing method described in JP 2012-141238, maximum signal value V0 before placement of an eddy current probe on the inspection surface and signal value V1 at the time of the placement are compared in terms of magnitude and according to the magnitude relation between these signal values, a liftoff value is determined from liftoff characteristics using any of a value of a detection signal generated upon contact of the eddy current probe with the inspection surface, characteristics of liftoff, signal value V0 and signal value V1.

In eddy-current testing, if liftoff, a phenomenon that the eddy-current testing probe leaves the surface of the object, occurs, a liftoff signal is detected as a noise and there are cases that the flaw signal to be detected is misidentified or cannot be detected. Since liftoff often occurs despite efforts to suppress liftoff, there is a demand for a method which separates and distinguishes a flaw signal and a liftoff signal. In the related art described in JP 2012-141238, for example, comparison is made between signals in terms of magnitude to determine the liftoff value. However, the liftoff signal phase differs according to the liftoff mode (how the probe leaves the inspection surface) and thus there is a problem that it is difficult to accurately separate and distinguish a flaw signal and a liftoff signal merely by comparing them in terms of magnitude without consideration for the signal phase.

### SUMMARY OF THE INVENTION

An object of the present invention is to provide an eddy-current testing method and eddy-current testing device which can separate and distinguish a flaw signal and a liftoff signal.

An eddy-current testing method of the present invention includes: liftoff signal measuring step of using an eddy-current testing probe including one or more coils, giving liftoff to the eddy-current testing probe, performing eddy-current testing on a reference specimen simulating an object, and measuring a liftoff signal of the reference specimen, an eddy-current testing signal generated by liftoff being defined as the liftoff signal; phase recording step of recording a phase of a Lissajous figure obtained from the liftoff signal of the reference specimen; eddy-current testing signal measuring step of performing eddy-current testing on the object using the eddy-current testing probe and measuring an eddy-current testing signal of the object; and/or decision step of deciding that the eddy-current testing signal detected in the eddy-current testing signal measuring step is a liftoff signal if the eddy-current testing probe detects the eddy-current testing signal in all the coils in the eddy-current testing signal measuring step and a phase of a Lissajous figure obtained from the eddy-current testing signal detected in the eddy-current testing signal measuring step coincides with the phase recorded in the phase recording step for all the coils.

According to the present invention, an eddy-current testing method and eddy-current testing device is provided which can separate and distinguish a flaw signal and a liftoff signal.

### BRIEF DESCRIPTION OF THE DRAWINGS

Fig. 1 is a flowchart of a method which separates and distinguishes a flaw signal and a liftoff signal using an eddy-current testing method according to a first embodiment of the present invention;
Fig. 2 shows an example of an eddy-current testing probe which detects a flaw in an object;
Fig. 3 shows liftoff modes which can occur in the eddy-current testing probe;
Fig. 4A shows an example of a Lissajous figure obtained from a flaw signal detected by the probe when the object is inspected by eddy-current testing;
Fig. 4B shows an example of a Lissajous figure obtained from a liftoff signal detected by the probe when the object is inspected by eddy-current testing;
Fig. 5 shows a Lissajous figure for the fourth channel when liftoff in a parallel mode is given to the probe and a liftoff distance of 0.5 mm is given to the detecting coil of the fourth channel;
Fig. 6 shows the phases of Lissajous figures for the first to eighth channels when liftoff in the parallel mode is given to the probe and liftoff distances of 0.2 mm and 0.5 mm are given to the detecting coil of the fourth channel;
Fig. 7 shows a Lissajous figure for the fourth channel when liftoff in a widthwise inclination mode is given to the probe and a liftoff distance of 0.2 mm is given to the detecting coil of the fourth channel;
Fig. 8 shows the phases of Lissajous figures for the first to eighth channels when liftoff in the widthwise inclination mode is given to the probe and liftoff distances of 0.2 mm and 0.5 mm are given to the detecting coil of the fourth channel;
Fig. 9 shows a Lissajous figure for the fourth channel when liftoff in a lengthwise inclination mode is given to the probe and a liftoff distance of 0.2 mm is given to the detecting coil of the fourth channel;
Fig. 10 shows the phases of Lissajous figures for the first to eighth channels when liftoff in the lengthwise inclination mode is given to the probe and liftoff distances of 0.2 mm and 0.5 mm are given to the detecting coil of the fourth channel;
Fig. 11 shows an example of liftoff of the probe in the widthwise inclination mode;
Fig. 12 shows an example of liftoff of the probe in the parallel mode;
Fig. 13 shows an example of liftoff of the probe in the lengthwise inclination mode;
Fig. 14 is a flowchart of a method which separates and distinguishes a flaw signal and a liftoff signal using an eddy-current testing method according to a second embodiment of the invention; and
Fig. 15 shows an eddy-current testing device according to a third embodiment of the present invention.

### DETAILED DESCRIPTION OF THE PREFERRED EMBODIMENTS

In the eddy-current testing method and eddy-current testing device according to the present invention, when an object is tested and a flaw in the object is detected, even if liftoff, a phenomenon that the eddy-current testing probe leaves the inspection surface as the surface of the object, occurs, an eddy-current testing signal (flaw signal) due to a flaw in the object and an eddy-current testing signal (liftoff signal) generated by the liftoff can be separated and distinguished and thus the flaw signal can be detected without fail. The object to be tested should be a conductor and, for example, it may be a rotor disc of a steam turbine (in particular, a small narrow portion such as a groove engaged with a moving blade).

First, a Lissajous figure which is used in the eddy-current testing methods according to the embodiments is explained here. The present invention focuses attention on the fact that the phase of a Lissajous figure obtained from a liftoff signal is different from the phase of a Lissajous figure obtained from a flaw signal. The phase of a liftoff signal is expressed as a phase of a Lissajous figure obtained from the liftoff signal, and the phase of a flaw signal is expressed as a phase of a Lissajous figure obtained from the flaw signal.

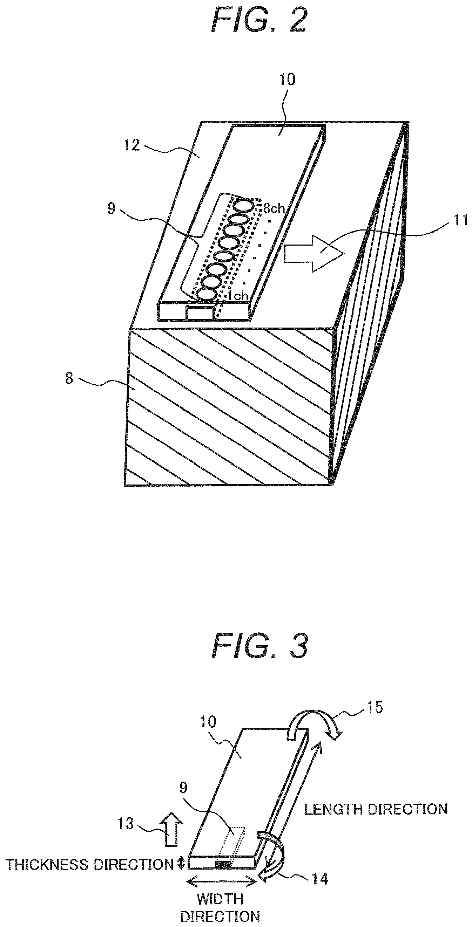

Fig. 2 shows an example of an eddy-current testing probe which detects a flaw in an object. The conductor as the object 8 has an inspection surface (eddy-current testing surface) 12 which is scanned by an eddy-current testing probe 10. The eddy-current testing probe 10 (hereinafter simply called "probe 10") includes a detecting coil section 9. The detecting coil section 9 includes one or more detecting coils which generate an AC magnetic field and detect an eddy-current testing signal, and these coils are arranged in a row in the detecting coil section 9. In Fig. 2, the detecting coil section 9 includes eight detecting coils and thus the probe 10 has eight channels (ch). The probe 10 is not flexible (not having a flexible structure) and it has a rigid unbending structure which is solidified with resin, etc. Therefore, the detecting coils of the detecting coil section 9 are integrated so that all the coils move almost in the same way with each other along with the movement of the probe 10 and contact or leave the object. In order to detect a flaw in the object 8, the probe 10 is scanned along a scanning direction 11 with the probe 10 in contact with the inspection surface 12 of the object 8.

If the object 8 has no flaw, the eddy current which occurs in the object 8 due to the AC magnetic field generated by the probe 10 has a uniform distribution regardless of a position of the probe 10 and thus the probe 10 does not detect an eddy-current testing signal. On the other hand, if the object 8 has a flaw, the eddy current which occurs in the object 8 has a distorted distribution and thus the probe 10 detects an eddy-current testing signal (flaw signal). The probe 10 detects not only a flaw signal but also an eddy-current testing signal (liftoff signal) due to liftoff which is a phenomenon that the probe 10 leaves the inspection surface 12. Liftoff occurs in several modes which are different depending on how the probe 10 leaves the inspection surface 12.

Fig. 3 shows liftoff modes which can occur in the eddy-current testing probe. As shown in Figs. 2 and 3, it is assumed that the probe 10 is a rectangular parallelepiped whose long sides are in the direction in which the coils of the detecting coil section 9 are arranged. The surface of the probe 10 to contact the inspection surface 12 (Fig. 2) of the object 8 is called "contact surface". The contact surface is rectangular and its long side direction is called "length direction" and its short side direction is called "width direction". The direction perpendicular to the contact surface of the probe 10 is called "thickness direction".

There are three modes in liftoff of the probe 10, parallel mode 13, widthwise inclination mode 14, and lengthwise inclination mode 15. The parallel mode 13 is a liftoff mode where the probe 10 leaves the inspection surface 12 with the contact surface of the probe 10 parallel to the inspection surface 12. The widthwise inclination mode 14 is a liftoff mode where the probe 10 leaves the inspection surface 12 with the contact surface of the probe 10 inclined with respect to the inspection surface 12 in the width direction (rotated around the length direction as a rotation axis). The lengthwise inclination mode 15 is a liftoff mode where the probe 10 leaves the inspection surface 12 with the contact surface of the probe 10 inclined with respect to the inspection surface 12 in the length direction (rotated around the width direction as a rotation axis).

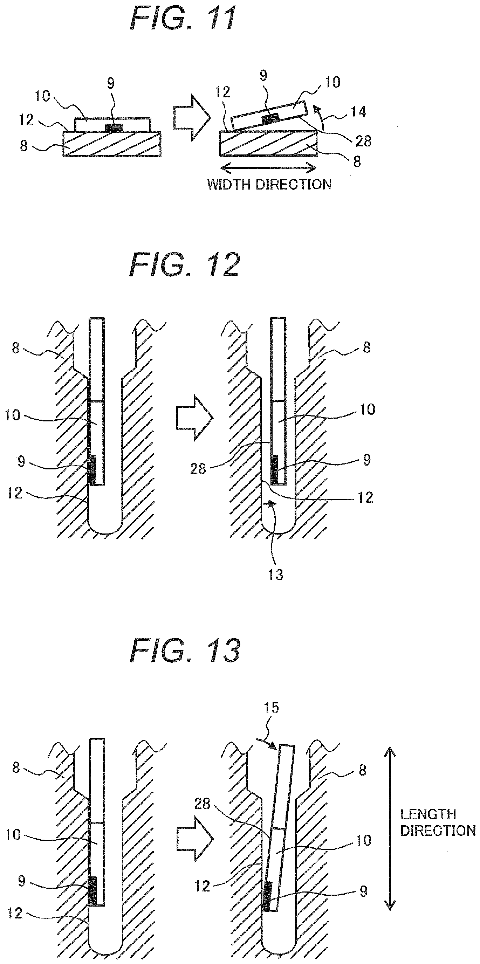

Fig. 11 shows an example of liftoff of the probe 10 in the widthwise inclination mode 14. In Fig. 11, the probe 10 shown on the left is in a state where no liftoff has occurred and the probe 10 shown on the right is in a state where liftoff has occurred in the widthwise inclination mode 14 due to vibration, etc. In the widthwise inclination mode 14, the probe 10 leaves the inspection surface 12 with the contact surface 28 inclined with respect to the inspection surface 12 in the width direction.

Fig. 12 shows an example of liftoff of the probe 10 in the parallel mode 13. It is assumed that the probe 10 is inserted in a small narrow portion of the object 8 (for example, in the groove of the rotor disc engaged with the moving blade of a steam turbine). In Fig. 12, the probe 10 shown on the left is in a state where no liftoff has occurred and the probe 10 shown on the right is in a state where liftoff has occurred in the parallel mode 13 due to vibration, etc. In the parallel mode 13, the probe 10 leaves the inspection surface 12 with the contact surface 28 parallel to the inspection surface 12.

Fig. 13 shows an example of liftoff of the probe 10 in the lengthwise inclination mode 15. It is assumed that the probe 10 is inserted in the small narrow portion of the object 8. In Fig. 13, the probe 10 shown on the left is in a state where no liftoff has occurred and the probe 10 shown on the right is in a state where liftoff has occurred in the lengthwise inclination mode 15 due to vibration, etc. In the lengthwise inclination mode 15, the probe 10 leaves the inspection surface 12 with the contact surface 28 inclined with respect to the inspection surface 12 in the length direction.

Since the probe 10 is solidified with resin, etc., substantially no distortion or bending occurs. The detecting coils of the detecting coil section 9 are integrated and all of the detecting coils move almost in the same way with each other along with the movement of the probe 10. Therefore, even if liftoff of the probe 10 occurs in the widthwise inclination mode 14, parallel mode 13, and lengthwise inclination mode 15, there is no possibility that some of the detecting coils of the probe 10 contact the object 8, and all the detecting coils (namely, all the channels) leave the inspection surface 12 of the object 8. If liftoff of the probe 10 occurs, all the detecting coils leave the inspection surface 12 of the object 8, so a liftoff signal is detected in all the channels.

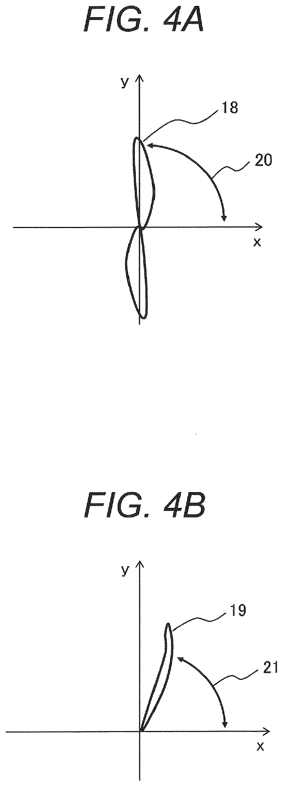

Figs. 4A and 4B show examples of Lissajous figures obtained from an eddy-current testing signal (voltage waveform) detected by the probe 10 when the object 8 is inspected by eddy-current testing. Fig. 4A shows an example of a Lissajous figure 18 obtained from a flaw signal, and Fig. 4B shows an example of a Lissajous figure 19 obtained from a liftoff signal. The Lissajous figures 18 and 19 indicate waveforms in which the x axis represents the real number part of the voltage of a detecting coil of the probe 10 and the y axis represents its imaginary number part. Since an AC voltage is applied in eddy-current testing, the voltage of the detecting coil (voltage detected by the probe 10) is an AC voltage.

In plotting a Lissajous figure, the initial phases of the real number part (x component) and imaginary number part (y component) can be arbitrarily set. In the examples shown in Figs. 4A and 4B and embodiments given below, for easy understanding, the initial phase is set so that the phase 20 of the Lissajous figure 18 obtained from a flaw signal has 90 degrees (Fig. 4A). (Namely, the Lissajous figure 18 has only the y component.)

The phase 21 of the Lissajous figure 19 obtained from a liftoff signal does not coincide with the phase 20 of the Lissajous figure 18 obtained from a flaw signal as shown in Fig. 4B, and the phase 21 has a value specific to the liftoff mode. Therefore, in eddy-current testing, in order to separate and distinguish a flaw signal and a liftoff signal in the signals detected by the probe 10, it is important to measure the phases of the Lissajous figures obtained from the signals detected by the probe 10.

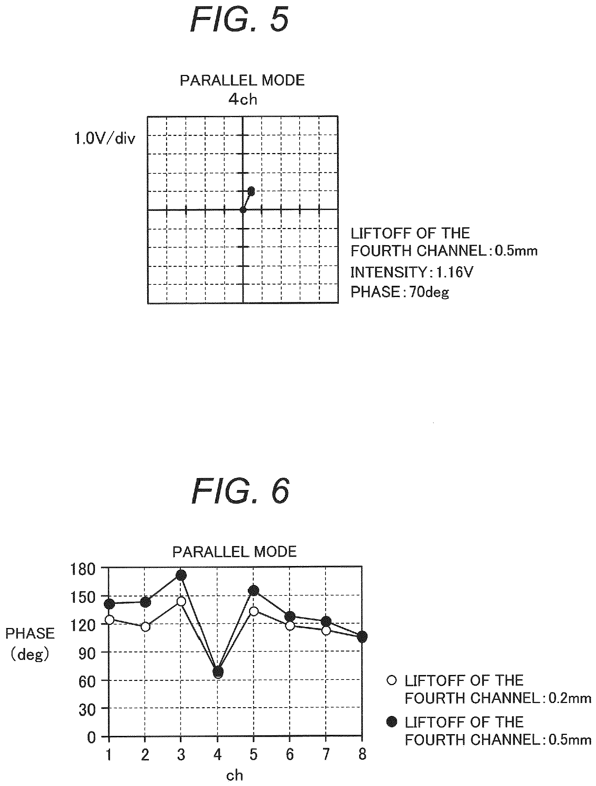

As shown in Fig. 3 and Figs. 11 to 13, there are three different modes for liftoff of the probe 10. Among these three modes, the phases 21 of the Lissajous figures 19 obtained from liftoff signals differ from each other (Figs. 6, 8 and 10 which will be explained later). Therefore, it is difficult to identify a liftoff signal by a mere comparison of magnitudes of signal values. The present invention focuses attention on the phases of Lissajous figures obtained from signals detected by the probe 10 to separate and distinguish a flaw signal and a liftoff signal.

Now, an eddy-current testing method and an eddy-current testing device according to embodiments of the present invention will be described.

### First Embodiment

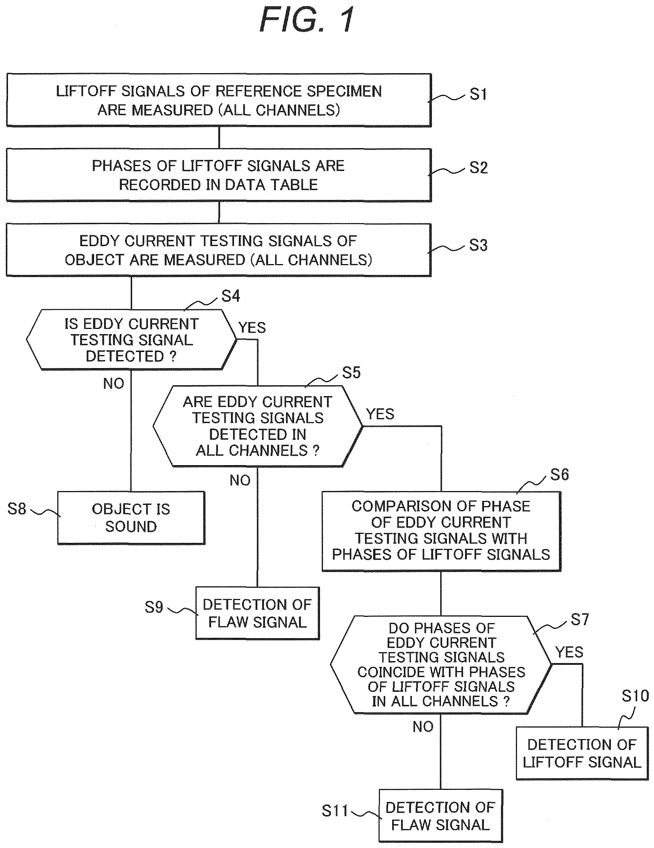

Fig. 1 is a flowchart of the method which separates and distinguishes a flaw signal and a liftoff signal using the eddy-current testing method according to the first embodiment of the invention.

In S1, eddy-current testing is performed on a reference specimen using the probe 10 to measure liftoff signals of the reference specimen. Liftoff signals are measured in all the channels (all the detecting coils of the detecting coil section 9) of the probe 10. The reference specimen is a trial object which simulates the real object 8. The reference specimen and the object 8 may have a magnetic property, for example, made of a ferromagnetic substance such as iron, or they may not have a magnetic property, for example, made of a diamagnetic substance such as copper.

A liftoff signal is measured by giving liftoff to the probe 10 using a tool or equipment to let the probe 10 leave the reference specimen and performing eddy-current testing on the reference specimen. The probe 10 is given liftoff in three modes, liftoff in the parallel mode 13, liftoff in the widthwise inclination mode 14, and liftoff in the lengthwise inclination mode 15. In liftoff in the widthwise inclination mode 14, liftoff signals in two types of inclinations (two types of rotations around the length direction as a rotation axis) are measured. In liftoff in the lengthwise inclination mode 15, liftoff signals in two types of inclinations (two types of rotations around the width direction as a rotation axis) are measured. In short, five types of liftoff are given to the probe 10 and the liftoff signal is measured for each of the five types of liftoff.

For each channel, a plurality of liftoff distances are given to each of the five types of liftoff and each liftoff signal is measured. The liftoff distance is a distance between a detecting coil and the reference specimen. The plural liftoff distances for measurement of liftoff signals may be determined arbitrarily depending on the characteristics of the object 8 and the probe 10 within the range of liftoff distances which can occur actually.

In S2, the phases of Lissajous figures obtained from the liftoff signals in each channel, which have been measured in S1, are recorded in a data table.

In S3, eddy-current testing is performed on the real object 8 using the probe 10 and an eddy-current testing signal of the object 8 is measured. Eddy-current testing signals are measured in all the channels (all the detecting coils of the detecting coil section 9) of the probe 10.

In S4, a decision is made as to whether the probe 10 has detected an eddy-current testing signal in eddy-current testing on the object 8 in S3. If the probe 10 has not detected an eddy-current testing signal in any channel, it means that a flaw signal and a liftoff signal have not been detected and thus the object 8 is sound without a flaw (S8) and it is decided that no liftoff has been detected in the eddy-current testing in S3. If the probe 10 has detected an eddy-current testing signal in at least one channel, the process proceeds to S5.

In S5, a decision is made as to whether the probe 10 has detected eddy-current testing signals in all the channels in eddy-current testing on the object 8 in S3. If there is any one channel which has not detected an eddy-current testing signal, it is decided that the eddy-current testing signal detected in S3 is a flaw signal and the object 8 has a flaw (S9). Specifically, if the probe has a plurality of channels (detecting coils) and has detected an eddy-current testing signal in one or more channels and has not detected an eddy-current testing signal in one or more channels, it is decided that the eddy-current testing signal detected in S3 is a flaw signal. If the probe 10 has detected eddy-current testing signals in all the channels, the process proceeds to S6.

In S6, the phases of the Lissajous figures obtained from the eddy-current testing signals detected by eddy-current testing on the object 8 (phases of the Lissajous figures obtained from the eddy-current testing signals of the object 8) are compared with the phases recorded in the data table in S2 (phases of the Lissajous figures obtained from the liftoff signals of the reference specimen) for all the channels of the probe 10. Specifically, all the channels of the probe 10 are checked as to whether the phases of the liftoff signals of the reference specimen as recorded in the data table include a phase which coincides with the phase of an eddy-current testing signal of the object 8.

In S7, if in all the channels of the probe 10 the phases of the Lissajous figures obtained from the eddy-current testing signals detected in eddy-current testing on the object 8 coincide with the phases recorded in the data table in S2 (namely, if the phases of the liftoff signals of the reference specimen include a phase which coincides with the phase of an eddy-current testing signal detected in eddy-current testing on the object 8), it is decided that the eddy-current testing signal of the object 8 as detected in S3 is a liftoff signal (S10). If in at least one channel of the probe 10, the phase of a Lissajous figure obtained from an eddy-current testing signal detected in eddy-current testing on the object 8 does not coincide with any phase recorded in the data table in S2, it is decided that the eddy-current testing signal detected in S3 is a flaw signal and the object 8 has a flaw (S11).

Figs. 5 to 10 show examples of Lissajous figures obtained from the liftoff signals of the reference specimen as measured in S1 in Fig. 1 and examples of the phases of the Lissajous figures recorded in S2. In plotting Lissajous figures from eddy-current testing signals (liftoff signals), the measuring instrument is initialized so that the phase of a Lissajous figure obtained from a flaw signal is 90 degrees, like the Lissajous figure 18 shown in Fig. 4A. As shown in Fig. 2, the detecting coils of the detecting coil section 9 of the probe 10 are arranged at equal intervals from one end in the length direction, sequentially as the first channel to the eighth channel.

Fig. 5 shows a Lissajous figure for the fourth channel when liftoff in the parallel mode 13 is given to the probe 10 and a liftoff distance of 0.5 mm is given to the detecting coil of the fourth channel. The intensity of the liftoff signal is 1.16 V and its phase is 70 degrees.

Fig. 6 shows the phases of Lissajous figures for the first to eighth channels when liftoff in the parallel mode 13 is given to the probe 10 and liftoff distances of 0.2 mm and 0.5 mm are given to the detecting coil of the fourth channel. As mentioned earlier, if liftoff in the parallel mode 13 occurs in the probe 10, all the detecting coils leave the reference specimen and all the detecting coils detect liftoff signals. Therefore, as shown in Fig. 6, phase characteristics of liftoff signals can be obtained for all the channels.

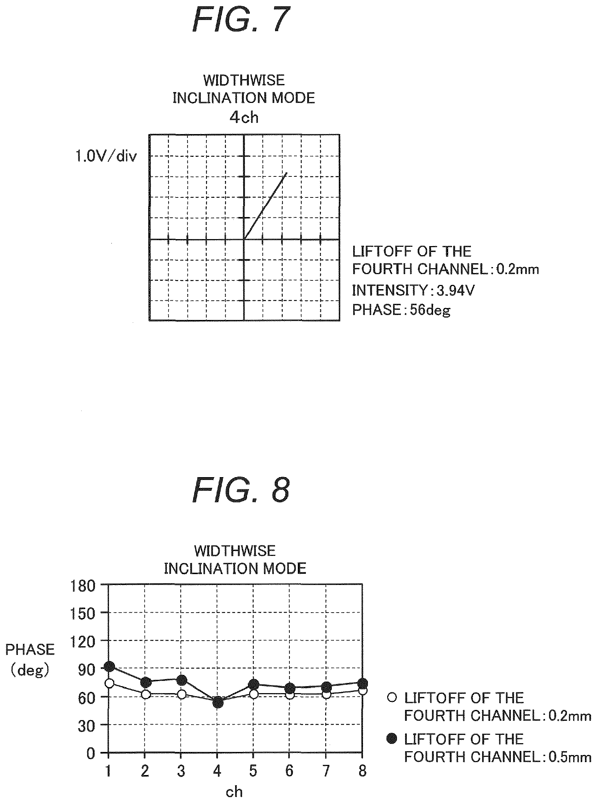

Fig. 7 shows a Lissajous figure for the fourth channel when liftoff in the widthwise inclination mode 14 is given to the probe 10 and a liftoff distance of 0.2 mm is given to the detecting coil of the fourth channel. The intensity of the liftoff signal is 3.94 V and its phase is 56 degrees.

Fig. 8 shows the phases of Lissajous figures for the first to eighth channels when liftoff in the widthwise inclination mode 14 is given to the probe 10 and liftoff distances of 0.2 mm and 0.5 mm are given to the detecting coil of the fourth channel. As mentioned earlier, if liftoff in the widthwise inclination mode 14 occurs in the probe 10, all the detecting coils leave the reference specimen and all the detecting coils detect liftoff signals. Therefore, as shown in Fig. 8, phase characteristics of liftoff signals can be obtained for all the channels.

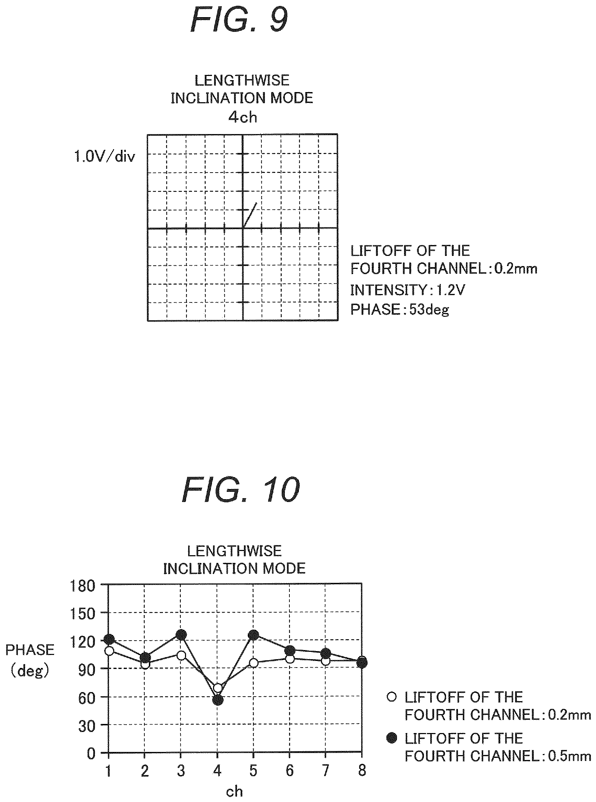

Fig. 9 shows a Lissajous figure for the fourth channel when liftoff in the lengthwise inclination mode 15 is given to the probe 10 and a liftoff distance of 0.2 mm is given to the detecting coil of the fourth channel. The intensity of the liftoff signal is 1.2 V and its phase is 53 degrees.

Fig. 10 shows the phases of Lissajous figures for the first to eighth channels when liftoff in the lengthwise inclination mode 15 is given to the probe 10 and liftoff distances of 0.2 mm and 0.5 mm are given to the detecting coil of the fourth channel. As mentioned earlier, if liftoff in the lengthwise inclination mode 15 occurs in the probe 10, all the detecting coils leave the reference specimen and all the detecting coils detect liftoff signals. Therefore, as shown in Fig. 10, phase characteristics of liftoff signals can be obtained for all the channels.

As explained so far, liftoff in one of the three modes, parallel mode 13, widthwise inclination mode 14, and lengthwise inclination mode 15, occurs in the probe 10, all the detecting coils of the detecting coil section 9 can detect a liftoff signal. The phase of a liftoff signal is different from the phase (90 degrees) of a flaw signal and varies depending on detecting coils (channels). The eddy-current testing method according to this embodiment takes advantage of such phase characteristics of liftoff signals to separate and distinguish a flaw signal and a liftoff signal.

### Second Embodiment

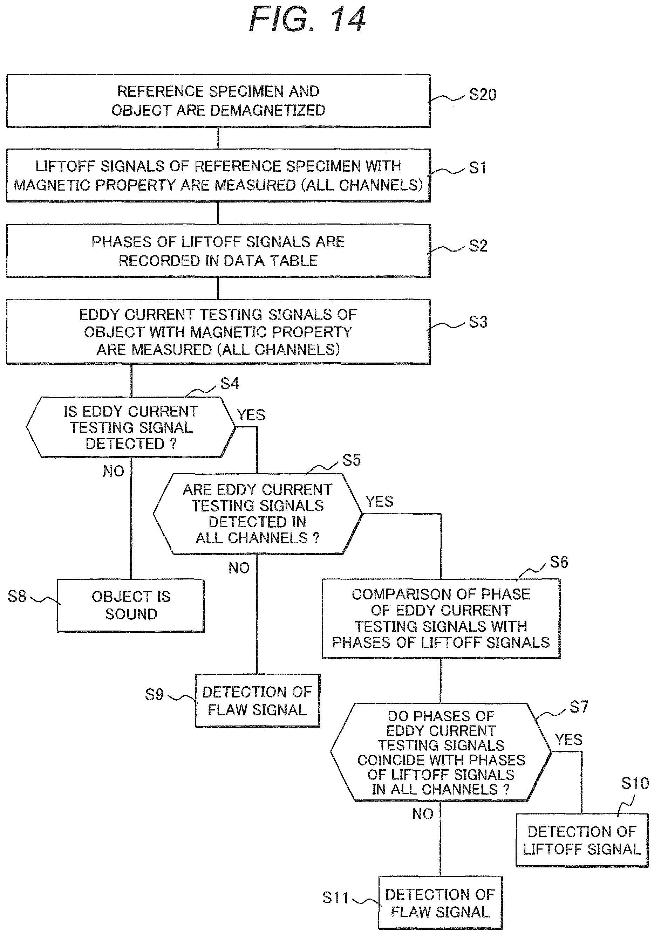

Fig. 14 is a flowchart of the method which separates and distinguishes a flaw signal and a liftoff signal using the eddy-current testing method according to the second embodiment of the present invention. In this embodiment, the reference specimen and the object 8 have a magnetic property and, for example, are made of a ferromagnetic substance such as iron. The flowchart shown in Fig. 14 is the same as the flowchart shown in Fig. 1 for the first embodiment, except that S20 is carried out before S1. In S20, the reference specimen and the object 8 are demagnetized.

If the object 8 has a magnetic property, an evaluation is conventionally made as to whether the object 8 has a flaw or not, for example, by a magnetic particle inspection (MT, magnetic particle testing). In the magnetic particle inspection, the object 8 is magnetized and magnetic particles are attached to the magnetized object 8, then the magnetic particle pattern is visually examined to find a flaw of the object 8, and then the object 8 is demagnetized and the magnetic particles are removed from the demagnetized object 8.

In the eddy-current testing method according to this embodiment, even if the object 8 has a magnetic property, Lissajous figures such as ones shown in Figs. 4A and 4B can be obtained by using a reference specimen which has a magnetic property. Therefore, a flaw signal and a liftoff signal can be separated and distinguished using the method shown in the flowchart in Fig. 14. In addition, the method eliminates some steps which are needed in the existing magnetic particle inspection, such as a step of magnetizing the object 8, a step of attaching magnetic particles to the magnetized object 8, and a step of removing the magnetic particles from the demagnetized object 8. For this reason, the eddy-current testing method according to this embodiment can evaluate whether the object 8 with a magnetic property has a flaw or not more easily than in the conventional method.

### Third Embodiment

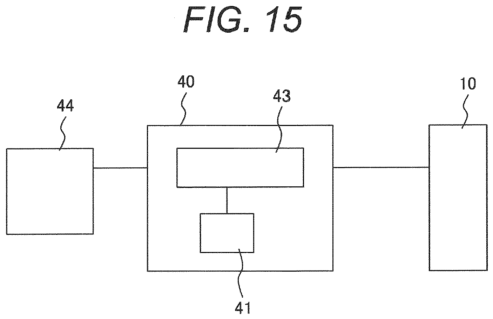

Fig. 15 shows an eddy-current testing device according the third embodiment of the present invention. The eddy-current testing device according to this embodiment includes a computer 40 and is used to perform the eddy-current testing method according to the first embodiment or second embodiment. The computer 40 includes a memory 41 as a recording device and a computing device 43 and is connected to the eddy-current testing probe 10 and a monitor 44 as a display unit. The memory 41 stores a program to perform the processes of S2 and S4 to S7 in the flowcharts shown in Fig. 1 of the first embodiment and in Fig. 14 of the second embodiment. The memory 41 can also store a program to carry out other processes. The computing device 43 executes programs stored in the memory 41. The monitor 44 can display data which the computer 40 inputs or outputs, such as values measured by the probe 10 and Lissajous figures obtained from eddy-current testing signals.

In S2 in Figs. 1 and 14, the memory 41 stores the phases of Lissajous figures obtained from liftoff signals in eddy-current testing performed on the reference specimen in S1 for all the channels of the probe 10 (all the detecting coils of the detecting coil section 9). The memory 41 stores the phases of Lissajous figures obtained from eddy-current testing signals of the object 8 measured in S3 in Figs. 1 and 14 for all the channels of the probe 10.

The computing device 43 performs the process of S2 in Figs. 1 and 14. Specifically, the computing device 43 stores in the memory 41 the phases of Lissajous figures obtained from liftoff signals in eddy-current testing performed on the reference specimen in S1 for all the channels of the probe 10.

Furthermore, the computing device 43 performs the process of S4 and S5 in Figs. 1 and 14. Specifically, the computing device 43 makes a decision about whether the probe 10 has detected an eddy-current testing signal by eddy-current testing on the object 8 in S3 and a decision about whether the probe 10 has detected eddy-current testing signals in all the channels.

Furthermore, the computing device 43 performs the process of S6 and S7 in Figs. 1 and 14. Specifically, for all the channels of the probe 10, the computing device 43 compares the phases of Lissajous figures obtained from eddy-current testing signals of the object 8 with the phases of Lissajous figures obtained from liftoff signals in eddy-current testing performed on the reference specimen, and decides that the eddy-current testing signal of the object 8 as detected in S3 is a liftoff signal if these compared phases coincide with each other in all the channels of the probe 10. If the computing device 43 decides that the eddy-current testing signal is a liftoff signal, the computing device 43 may output a signal to the monitor 44 to make the monitor 44 show that the eddy-current testing signal is a liftoff signal or may output the eddy-current testing signal as a liftoff signal to the monitor 44.

In this embodiment, the structure of the eddy-current testing device has been briefly explained. The eddy-current testing device according to this embodiment can separate and distinguish a flaw signal and a liftoff signal by using the computer 40 including the memory 41 and the computing device 43.

The present invention is not limited to the above embodiments and may be embodied in other various aspects. The above embodiments have been explained in detail for easy understanding of the invention and embodiments of the invention need not include all the above elements. Some elements of an embodiment may be replaced by elements of another embodiment. Also, some elements of an embodiment may be added to another embodiment. Also, addition of other elements or deletion or replacement of some elements may be made for each embodiment.
Features, components and specific details of the structures of the above-described embodiments may be exchanged or combined to form further embodiments optimized for the respective application. As far as those modifications are readily apparent for an expert skilled in the art they shall be disclosed implicitly by the above description without specifying explicitly every possible combination, for the sake of conciseness of the present description.

### EXPLANATION OF REFERENCE CHARACTERS

8 object
9 Detecting coil section
10 Eddy-current testing probe
11 Scanning direction
12 Inspection surface
13 Parallel mode
14 Widthwise inclination mode
15 Lengthwise inclination mode
18 Lissajous figure obtained from a flaw signal
19 Lissajous figure obtained from a liftoff signal
20 Phase of Lissajous figure obtained from a flaw signal
21 Phase of Lissajous figure obtained from a liftoff signal
28 Contact surface
40 Computer
41 Memory
43 Computing device
44 Monitor

## Claims

1. An eddy-current testing method comprising:
liftoff signal measuring step (S1) of using an eddy-current testing probe (10) including one or more coils (9), giving liftoff to the eddy-current testing probe (10), performing eddy-current testing on a reference specimen simulating an object (8), and measuring a liftoff signal of the reference specimen, an eddy-current testing signal generated by liftoff being defined as the liftoff signal;
phase recording step (S2) of recording a phase of a Lissajous figure obtained from the liftoff signal of the reference specimen;
eddy-current testing signal measuring step (S3) of performing eddy-current testing on the object (8) using the eddy-current testing probe (10) and measuring an eddy-current testing signal of the object (8); and
decision step (S5, S7) of deciding that the eddy-current testing signal detected in the eddy-current testing signal measuring step (S3) is a liftoff signal if the eddy-current testing probe (10) detects the eddy-current testing signal in all the coils (9) in the eddy-current testing signal measuring step (S3) and a phase of a Lissajous figure obtained from the eddy-current testing signal detected in the eddy-current testing signal measuring step (S3) coincides with the phase recorded in the phase recording step (S2) for all the coils (9).

2. The eddy-current testing method according to claim 1, wherein
an eddy-current testing signal due to a flaw in the object (8) is defined as a flaw signal,
the eddy-current testing probe (10) includes a plurality of the coils (9), and
the decision step (S5, S7) decides that the eddy-current testing signal detected in the eddy-current testing signal measuring step (S3) is a flaw signal if the eddy-current testing probe (10) includes one or more coils (9) that have detected the eddy-current testing signal and one or more coils (9) that have not detected the eddy-current testing signal in the eddy-current testing signal measuring step (S3).

3. The eddy-current testing method according to claim 1, wherein
an eddy-current testing signal due to a flaw in the object (8) is defined as a flaw signal,
the eddy-current testing probe (10) includes a plurality of the coils (9), and
the decision step (S5, S7) decides that the eddy-current testing signal detected in the eddy-current testing signal measuring step (S3) is a flaw signal if the phase of the Lissajous figure obtained from the eddy-current testing signal detected in the eddy-current testing signal measuring step (S3) does not coincide with the phase recorded in the phase recording step (S2) for at least one of the coils (9) in the decision step (S5, S7).

4. The eddy-current testing method according to any one of claims 1 to 3, wherein
the eddy-current testing method is performed on the reference specimen having a magnetic property and the object (8) having a magnetic property.

5. An eddy-current testing device (40) for performing the eddy-current testing method according to any one of claims 1 to 3, comprising:
a memory (41) configured to store the phase of the Lissajous figure obtained from the liftoff signal of the reference specimen; and
a computing device (43) configured to perform the phase recording step (S2) and the decision step (S5, S7), wherein
the eddy-current testing device (40) is connectable to the eddy-current testing probe (10).

6. The eddy-current testing device (40) according to claim 5, wherein
the eddy-current testing device (40) performs the eddy-current testing on the reference specimen having a magnetic property and the object (8) having a magnetic property.

7. An eddy-current testing device (40), connectable to a display unit (44) and an eddy-current testing probe (10) including one or more coils (9), comprising:
a recording unit (41) configured to record a phase of a Lissajous figure obtained from a liftoff signal detected by the eddy-current testing probe (10); and
a computing device (43) configured to compare a phase of a Lissajous figure obtained from an eddy-current testing signal detected by the eddy-current testing probe (10) with the phase of the Lissajous figure recorded in the recording unit (41) and to output the eddy-current testing signal as a liftoff signal to the display unit (44) if the compared phases coincide with each other for all the coils (9) of the eddy-current testing probe (10).
